# EUROPÄISCHE PATENTSCHRIFT

(11) **EP 4 002 616 B1**
(45) Veröffentlichungstag und Bekanntmachung des Hinweises auf die Patenterteilung: **13.08.2025**
(21) Anmeldenummer: 21209109.4
(22) Anmeldetag: 18.11.2021
(51) Int. Cl.: H02G 3/08, H02G 15/013

(54) **EINLEGER, ELEKTRISCHES GERÄT UND VERFAHREN ZUR HERSTELLUNG EINES ELEKTRISCHEN GERÄTS**
DEPOSITOR, ELECTRICAL DEVICE AND METHOD FOR THE PREPARATION OF AN ELECTRICAL DEVICE
ÉLÉMENT D'INSERTION, APPAREIL ÉLECTRIQUE ET PROCÉDÉ DE FABRICATION D'UN APPAREIL ÉLECTRIQUE

(30) Priorität: 20.11.2020 DE 102020130772
(43) Veröffentlichungstag der Anmeldung: 25.05.2022
(73) Patentinhaber: Yazaki Systems Technologies GmbH, 93059 Regensburg (DE)
(72) Erfinder: WITTMANN, Michael, 92318 Neumarkt (DE); VON KNORRE, Dietrich, 27777 Ganderkesee (DE)
(74) Vertreter: Patentanwaltskanzlei WILHELM & BECK

(56) Entgegenhaltungen:
- WO-A1-2005/101603
- DE-A1- 3 403 387
- US-A- 5 453 579
- US-B1- 6 265 670

## Beschreibung

Die Erfindung betrifft ein elektrisches Gerät gemäß Patentanspruch 1 und ein Verfahren zur Herstellung solch eines elektrischen Geräts gemäß Patentanspruch 8.

Es sind verschiedenartige Ausgestaltungen von Kabeldurchführungen in ein Gehäuse bekannt. Eine Schwierigkeit hierbei ist, die Kabeldurchführung fluiddicht auszugestalten. Insbesondere bei Kabeldurchführungen in Gehäusen, die beispielsweise in einem Motorraum eines Kraftfahrzeugs angeordnet sind, ist die Kabeldurchführung besonders wichtig, um den Eintritt von verschiedenen Flüssigkeiten in das Gehäuse zu verhindern. Ferner treten hier besonders hohe Temperaturdifferenzen auf, die dazu führen, dass die Kabeldurchführung undicht werden kann.

Ferner sind aus der DE 20 2015 106 891 U1, US 5 422 436 A und CN 1 04 810 768 A verschiedene Kabeldurchführungen bekannt.

Aus der DE 34 03 387 A1 ist ein Mehrfachdichtstopfen für elektrische Armaturen bekannt.

Aus der WO 2005/101603 A1 ist ein Kabelabdichtungselement bekannt.

Es ist daher Aufgabe der Erfindung, ein verbessertes elektrisches Gerät und ein verbessertes Verfahren zur Herstellung eines elektrischen Geräts bereitzustellen.

Diese Aufgabe wird mittels eines elektrischen Geräts, insbesondere eines Steuergeräts, gemäß Patentanspruch 1 und eines Verfahrens zur Herstellung solch eines elektrischen Geräts gemäß Patentanspruch 8 gelöst. Vorteilhafte Ausführungsformen sind in den abhängigen Ansprüchen angegeben.

Ein verbessertes elektrisches Gerät, insbesondere ein verbessertes Steuergerät, kann dadurch bereitgestellt werden, dass das elektrische Gerät einen Einleger, wenigstens eine Stromübertragungskomponente und eine Gehäusewand eines Gehäuses mit einer Innenwand und eine beabstandet bezogen auf die Achse zu der Innenwand angeordnete Außenwand aufweist. Der Einleger weist eine erste Wandung und eine entlang einer Achse beabstandet zu der ersten Wandung versetzt angeordnete zweite Wandung und eine erste Kammer aufweist. Die erste Wandung weist eine erste Durchgangsöffnung und die zweite Wandung weist eine zweite Durchgangsöffnung auf, wobei die erste Durchgangsöffnung und die zweite Durchgangsöffnung fluchtend bezogen die Achse ausgebildet sind. Die erste Wandung ist ausgebildet, an der ersten Durchgangsöffnung und die zweite Wandung ist ausgebildet, an der zweiten Durchgangsöffnung an einer Stromübertragungskomponente des elektrischen Geräts anzuliegen. Der Einleger weist eine erste Kammer auf, die zwischen der ersten Wandung und der zweiten Wandung angeordnet ist. Die erste Durchgangsöffnung und die zweite Durchgangsöffnung münden an der ersten Kammer. Die erste Kammer ist zur Aufnahme einer Vergussmasse ausgebildet. Die Außenwand weist eine dritte Durchgangsöffnung und die Innenwand eine vierte Durchgangsöffnung auf, in die der Einleger eingreift. Die Innenwand und die Außenwand begrenzen eine Gehäusekammer, wobei die Gehäusekammer und die erste Kammer ineinander münden. Die erste Kammer und die Gehäusekammer sind mit einer Vergussmasse verfüllt, wobei die Stromübertragungskomponente zumindest die erste und zweite Durchgangsöffnung durchgreift und zwischen der ersten Wandung und der zweiten Wandung in der Vergussmasse eingebettet ist.

Diese Ausgestaltung hat den Vorteil, dass durch das Anliegen der ersten Wandung an der ersten Durchgangsöffnung und dem Anliegen der zweiten Wandung an der zweiten Durchgangsöffnung ein Austritt der Vergussmasse aus der ersten Kammer verhindert wird. Ferner kann durch die Anordnung der ersten Kammer in dem Einleger die Stromübertragungskomponente durch die Vergussmasse in den Einleger besonders gut umgossen werden. Dadurch ist die Stromübertragungskomponente im Bereich des Einlegers vollständig in der Vergussmasse eingebettet.

Durch die Einbettung ist die Stromübertragungskomponente umfangsseitig vollständig durch die Vergussmasse umschlossen, sodass eine besonders gute und fluiddichte Abdichtung eines Gehäuseinnenraums des Gehäuses gegenüber einer Umgebung des Gehäuses sichergestellt ist. Dadurch sind Elektronikkomponenten des elektrischen Geräts im Gehäuseinnenraum vor korrosiven Medien geschützt. Insbesondere bei Anordnung des elektrischen Geräts in einem Motorraum eines Kraftfahrzeugs wird durch die Einbettung der Stromübertragungskomponente in die Vergussmasse das Eindringen der korrosiven Medien in den Gehäuseinnenraum verhindert.

Zusätzlich wird keine Spritzgussform zum Umgießen der Stromübertragungskomponente benötigt, da die formgebende Funktion durch den Einleger mit der ersten und zweiten Wandung erfüllt wird.

In einer weiteren Ausführungsform erstreckt sich die erste Kammer in einer Haupterstreckungsrichtung, wobei die Haupterstreckungsrichtung geneigt, vorzugsweise senkrecht, zu der Achse verläuft. Eine maximale erste Erstreckung der ersten Kammer in der Haupterstreckungsrichtung ist wenigstens doppelt so groß wie eine maximale zweite Erstreckung der ersten Durchgangsöffnung geneigt, vorzugsweise senkrecht, zu der Achse und entlang der Haupterstreckungsrichtung. Dadurch ist sichergestellt, dass die erste Kammer hinreichend Volumen zur Aufnahme der Vergussmasse aufweist, um ein vollständiges Umfließen der Stromübertragungskomponente umfangsseitig sicherzustellen.

In einer weiteren Ausführungsform weist der Einleger zwischen der ersten Wandung und der zweiten Wandung eine zweite Kammer auf, wobei die zweite Kammer nutförmig an dem Einleger ausgeformt und zur Aufnahme der Vergussmasse und/oder einer Gehäusewand eines Gehäuses eines elektrischen Geräts ausgebildet ist. Diese Ausgestaltung stellt sicher, dass eine gute stoffschlüssige Anbindung des Einlegers über die in der zweiten Kammer angeordnete Vergussmasse zu einer Gehäusewand sichergestellt ist.

In einer weiteren Ausführungsform weist der Einleger einen Verbindungssteg auf, wobei der Verbindungssteg sich zwischen der ersten Wandung und der zweiten Wandung erstreckt und die erste Wandung mit der zweiten Wandung verbindet. Diese Ausgestaltung hat den Vorteil, dass der Einleger besonders steif ist und ein Volumen der ersten und zweiten Kammer besonders groß ist.

In einer weiteren Ausführungsform weist der Einleger auf einer der ersten Kammer abgewandten Seite eine Steckkulisse einer Kontakteinrichtung auf, wobei die Steckkulisse umfangsseitig um die Stromübertragungskomponente ausgebildet ist. Diese Ausgestaltung hat den Vorteil, dass auf einfache Weise die Stromübertragungskomponente mit einer weiteren Kontakteinrichtung kontaktierbar ist, wobei ein Kontaktgehäuse der weiteren Kontakteinrichtung durch die Steckkulisse führbar ist und mechanisch an dem Einleger befestigt werden kann.

In einer weiteren Ausführungsform weist das Gehäuse einen weiteren Einleger auf, wobei der Einleger mit dem weiteren Einleger zu einem Sammeleinleger verbunden ist, wobei die Gehäusewand zwischen dem Einleger und dem weiteren Einleger eingreift, wobei der Sammeleinleger formschlüssig an der Gehäusewand befestigt ist. Diese Ausgestaltung hat den Vorteil, dass durch die formschlüssige Befestigung ein Austritt der Vergussmasse beim Gießen der Vergussmasse in die erste Kammer und in die Gehäusekammer im Wesentlichen verhindert wird.

Ein Austritt der Vergussmasse aus der ersten Kammer und/oder der Gehäusekammer wird dadurch verhindert, dass die Gehäusewand und die erste Wandung und/oder die zweite Wandung überlappend angeordnet sind.

In einer weiteren Ausführungsform weist die Gehäusewand und/oder der Einleger wenigstens einen der folgenden ersten Werkstoffe auf: Kunststoff, Thermoplast, Polyethylen, Silikon, Polyurethan, Schaum, geschlossenporigen Schaum. Von besonderem Vorteil ist, wenn die Vergussmasse wenigstens einen der zweiten Werkstoffe aufweist: Kunststoff, Thermoplast, Polyethylen, Polyurethan, Silikon. Ferner ist von Vorteil, wenn der erste Werkstoff und der zweite Werkstoff identisch ausgebildet sind. Dies stellt sicher, dass die stoffschlüssige Verbindung zwischen dem ersten Werkstoff und dem zweiten Werkstoff besonders gut ist und eine besonders gute Vernetzung zwischen der Vergussmasse und dem Einleger erfolgt.

In einer weiteren Ausführungsform verbindet die Vergussmasse stoffschlüssig den Einleger mit der Gehäusewand und der Stromübertragungskomponente. Diese Ausgestaltung hat den Vorteil, dass ein ungewolltes Lösen des Einlegers verhindert wird. Ferner wird durch eine formschlüssige und/oder reibschlüssige Verbindung des Einlegers mit der Gehäusewand eine Beschädigung der stoffschlüssigen Verbindung verhindert. Insbesondere, wenn an der Stromübertragungskomponente eine Zugkraft wirkt, kann durch die formschlüssige und stoffschlüssige Verbindung des Einlegers mit der Gehäusewand die Zugkraft besonders gut in die Gehäusewand abgestützt werden.

In einem Verfahren zur Herstellung des elektrischen Geräts werden ein oben beschriebener Einleger, wenigstens eine Stromübertragungskomponente und ein Gehäuse bereitgestellt. Die Stromübertragungskomponente wird durch die erste und zweite Durchgangsöffnung geführt. Der Einleger wird in die Gehäusewand derart eingesteckt, dass die erste Kammer des Einlegers und die Gehäusekammer der Gehäusewand fluidisch miteinander verbunden sind, wobei ein Vorprodukt einer Vergussmasse oder eine flüssige Vergussmasse in die erste Kammer des Einlegers und die Gehäusekammer der Gehäusewand eingebracht wird. Das Vorprodukt wird zu der Vergussmasse ausgehärtet oder die flüssige Vergussmasse wird ausgehärtet. Diese Ausgestaltung hat den Vorteil, dass eine fluiddichte Abdichtung zwischen dem Einleger und der Gehäusewand einerseits und der Stromübertragungskomponente und der Vergussmasse andererseits sichergestellt ist.

In einer weiteren Ausführungsform umfließt die Vergussmasse in der ersten Kammer die Stromübertragungskomponente. Von besonderem Vorteil ist, wenn das Vorprodukt der Vergussmasse beim Aushärten aufschäumt. Diese Ausgestaltung hat den Vorteil, dass durch das Aufschäumen die Vergussmasse in der ersten Kammer und in der Gehäusekammer lokal unter Druck steht und so besonders gut in Ritzen und Ecken der Stromübertragungskomponente eindringt und dadurch die Stromübertragungskomponente besonders gut durch die Vergussmasse eingeschlossen wird.

Ferner ist von Vorteil, wenn die Gehäusewand und die erste Wandung und/oder zweite Wandung überlappend angeordnet werden.

Nachfolgend wird die Erfindung anhand von Figuren näher erläutert. Dabei zeigen:
Figur 1eine schematische Darstellung eines elektrischen Geräts gemäß einer ersten Ausführungsform;
Figur 2eine erste Seitenansicht auf einen in Figur 1 gezeigten ersten Einleger;
Figur 3eine Draufsicht auf den in den Figuren 1 und 2 gezeigten ersten Einleger;
Figur 4eine zweite Seitenansicht auf den in den Figuren 1 bis 3 gezeigten ersten Einleger;
Figur 5eine perspektivische Darstellung eines Gehäuses mit einer Gehäusewand des in den Figuren 1 bis 4 gezeigten elektrischen Geräts;
Figur 6eine perspektivische Darstellung auf einen in Figur 1 gezeigten zweiten Einlegers;
Figur 7eine perspektivische Darstellung auf einen in Figur 1 gezeigten dritten Einlegers;
Figur 8eine perspektivische Darstellung des in Figur 1 gezeigten elektrischen Geräts;
Figur 9eine perspektivische Darstellung eines elektrischen Geräts gemäß einer zweiten Ausführungsform;
Figur 10 eine perspektivische Darstellung eines ersten Einlegers des in Figur 9 gezeigten elektrischen Geräts;
Figur 11 eine perspektivische Darstellung eines zweiten Einlegers des in Figur 9 gezeigten elektrischen Geräts;
Figur 12 eine perspektivische Darstellung eines in Figur 9 gezeigten dritten Einlegers des in Figur 9 gezeigten elektrischen Geräts;
Figur 13 eine perspektivische Darstellung des Gehäuses und der Gehäusewand des in Figur 9 gezeigten elektrischen Geräts;
Figur 14 eine perspektivische Darstellung eines elektrischen Geräts gemäß einer dritten Ausführungsform;
Figur 15 eine perspektivische Darstellung eines elektrischen Geräts gemäß einer vierten Ausführungsform;
Figur 16 eine perspektivische Darstellung eines elektrischen Geräts gemäß einer fünften Ausführungsform;

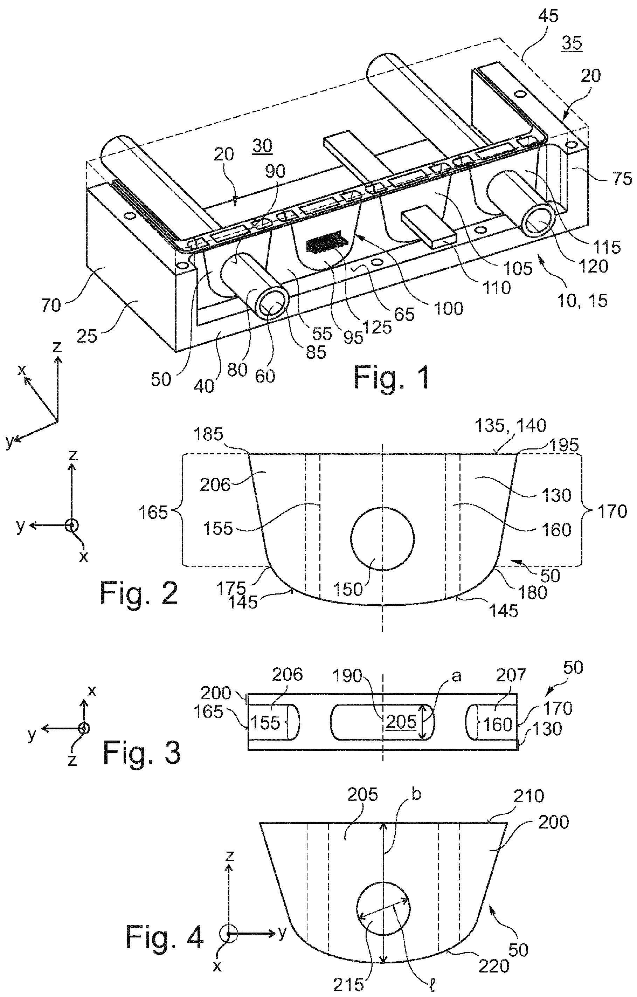

Figur 1 zeigt einen Ausschnitt einer schematischen Darstellung eines elektrischen Geräts 10, beispielsweise eines Steuergeräts 15 eines Kraftfahrzeugs.

Das elektrische Gerät 10 weist ein Gehäuse 25 mit einer Kabeldurchführung 20 auf. Das Gehäuse 25 begrenzt einen Gehäuseinnenraum 30, der fluiddicht gegenüber einer Umgebung 35 des elektrischen Geräts 10 ausgebildet ist. Das Gehäuse 25 weist ein Gehäuseteil 40, das beispielsweise schalenförmig ausgebildet ist, und einen Gehäusedeckel 45 auf. Der Gehäusedeckel 45 ist in Figur 1 beispielhaft strichliert schematisch angedeutet, um eine Sichtbarkeit der Kabeldurchführung 20 und einen Blick in den Gehäuseinnenraum 30 zu ermöglichen. Der Gehäusedeckel 45 kann beispielsweise plattenförmig ausgebildet sein und oberseitig den Gehäuseinnenraum 30 an dem Gehäuseteil 40 verschließen. Zusätzlich kann zwischen dem Gehäuseteil 40 und dem Gehäusedeckel 45 ein nicht dargestelltes Dichtelement vorgesehen sein, um die Fluiddichtheit des Gehäuseinnenraums 30 gegenüber der Umgebung 35 sicherzustellen.

Durch die fluiddichte Ausgestaltung eignet sich das in Figur 1 gezeigte elektrische Gerät 10, insbesondere das Steuergerät 15, zur Anordnung in thermischen und/oder feuchten Umgebungsbedingungen. So kann beispielsweise durch die fluiddichte Ausgestaltung das elektrische Gerät 10 beispielsweise in einem Motorraum oder an einer Unterseite des Kraftfahrzeugs angeordnet sein und Feuchtigkeitseinflüssen, beispielsweise Spritzwasser und/oder thermischer Wärme durch eine Brennkraftmaschine des Kraftfahrzeugs, ausgesetzt sein.

Die Kabeldurchführung 20 weist wenigstens einen ersten Einleger 50 und wenigstens eine erste Stromübertragungskomponente 60 auf. Das Gehäuseteil 40 weist eine erste Gehäusewand 55 auf. Beispielhaft erstreckt sich in Figur 1 die erste Gehäusewand 55 senkrecht zu einem Gehäuseboden 65 des Gehäuseteils 40.

Dabei kann die erste Gehäusewand 55 sich in einer yz-Ebene erstrecken. Die erste Gehäusewand 55 verbindet in Querrichtung angeordnete zweite Gehäusewand 70 des Gehäuseteils 40 mit einer zur zweiten Gehäusewand 70 gegenüberliegend angeordnete dritte Gehäusewand 75 miteinander, die beispielsweise parallel zueinander in xz-Ebenen verlaufen. Von besonderem Vorteil ist hierbei, wenn das Gehäuseteil 40 einstückig und materialeinheitlich, vorzugsweise in einem Gussvorgang hergestellt wird.

Die erste Stromübertragungskomponente 60 ist beispielsweise ein erstes elektrisches Kabel, das einen innenseitig in einer Ummantelung 80 eingebetteten elektrischen Leiter 85 aufweist. In der Ausführungsform ist die Ummantelung 80 als Kabelummantelung ausgebildet. Dabei wird der elektrische Leiter 85 vollständig umfangsseitig durch die Ummantelung 80 umschlossen. Die Ummantelung 80 weist an einer ersten äußeren Umfangsseite 90 beispielhaft eine kreisförmige Ausgestaltung auf. Auch eine andere Ausgestaltung der Ummantelung 80 wäre denkbar. Von besonderem Vorteil ist hierbei, wenn bei der Herstellung der Ummantelung 80 auf den Einsatz von Trennmitteln verzichtet wird und die erste äußere Umfangsseite 90 im Wesentlichen frei von Trennmittel ist.

Der elektrische Leiter 85 kann fein- oder feinstdrähtig ausgebildet sein und ist ausgebildet, einen elektrischen Strom zur Leistungsübertragung (in einem Bereich von 0,1 Ampere bis 1.000 Ampere) zu übertragen. Die erste Stromübertragungskomponente 60 erstreckt sich beispielsweise durch die Kabeldurchführung 20 und ist sowohl in dem Gehäuseinnenraum 30 als auch in der Umgebung 35 des elektrischen Geräts 10 verlaufend angeordnet. Die erste Stromübertragungskomponente 60 kann beispielsweise das elektrische Steuergerät 15 mit elektrischer Energie zum Betrieb des elektrischen Steuergeräts 15 versorgen.

Zusätzlich oder alternativ kann das elektrische Gerät 10 zu dem ersten Einleger 50 und der ersten Stromübertragungskomponente 60 einen zweiten Einleger 95 und eine zweite Stromübertragungskomponente 100, zusätzlich oder alternativ einen dritten Einleger 105 und eine dritte Stromübertragungskomponente 110 und zusätzlich oder alternativ einen vierten Einleger 115 und eine vierte Stromübertragungskomponente 120 aufweisen. Die zweite Stromübertragungskomponente 100 kann beispielsweise ein mehrpoliges elektrisches Kontaktelement, beispielsweise ein Pinkontakt, sein. Dabei können einzelne Pins 125 der zweiten Stromübertragungskomponente 100 in einer Reihe angeordnet sein. Die Pins 125 sind elektrisch zueinander isoliert und dienen beispielsweise dazu, ein Datensignal zu übertragen. Dabei kann das Datensignal gegenüber der Leistungsübertragung mittels der ersten Stromübertragungskomponente 60 dahingehend unterschieden werden, dass das Datensignal einen elektrischen Strom von kleiner 0,1 Ampere aufweist.

Die dritte Stromübertragungskomponente 110 kann beispielsweise eine elektrisch leitfähige Schiene, beispielsweise ein Busbar, sein. Auch eine andere Ausgestaltung der dritten Stromübertragungskomponente 110 ist möglich. Die dritte Stromübertragungskomponente 110 unterscheidet sich von der ersten Stromübertragungskomponente 60 dahingehend, dass die Schiene im Wesentlichen einstückig und materialeinheitlich ausgebildet ist und sich entlang der x-Achse im Wesentlichen mit konstantem Querschnitt erstreckt. Umfangsseitig wird auf eine Ummantelung der Schiene verzichtet.

Die vierte Stromübertragungskomponente 120 ist im Wesentlichen identisch zu der ersten Stromübertragungskomponente 60 ausgebildet.

Figur 2 zeigt eine erste Seitenansicht auf den in Figur 1 gezeigten ersten Einleger 50.

Der erste Einleger 50 weist auf einer dem Betrachter und der Umgebung 35 zugewandten Seite eine erste Wandung 130 auf. Die erste Wandung 130 ist beispielhaft im Wesentlichen plattenförmig ausgebildet und erstreckt sich beispielsweise in einer yz-Ebene, die durch die x-Achse und die y-Achse aufgespannt wird. Die erste Wandung 130 ist auf einer dem Gehäuseinnenraum 30 abgewandten Seite des Einlegers 50 angeordnet.

In der Draufsicht weist der erste Einleger 50 eine erste Außenkontur 135 auf. Die erste Außenkontur 135 ist im Wesentlichen trapezförmig ausgebildet. An einer ersten Oberseite 140, die in montiertem Zustand auf einer dem Gehäusedeckel 45 zugewandten Seite angeordnet ist, ist der erste Einleger 50 im Wesentlichen plan ausgebildet. Ferner weist der erste Einleger 50 eine erste Durchgangsöffnung 150 auf. Die erste Durchgangsöffnung 150 erstreckt sich von einer dem Gehäuseinnenraum 30 abgewandten Seite der ersten Wandung 130 bis zu der ersten Kammer 150. In nichtmontiertem Zustand verbindet die erste Durchgangsöffnung 150 die erste Kammer 130 fluidisch hin zu der zum Gehäuseinnenraum 30 abgewandten Seite mit der Umgebung 35. Die erste Durchgangsöffnung 150 ist in z-Richtung zwischen der ersten Oberseite 140 und einer ersten Unterseite 145 des ersten Einlegers 50 beispielhaft mittig in Querrichtung angeordnet. Die erste Durchgangsöffnung 150 ist beispielhaft bohrungsartig ausgebildet ist. Eine Kontur der ersten Durchgangsöffnung 150 ist zumindest bereichsweise korrespondierend zu der ersten äußeren Umfangsseite 90 der Ummantelung 80 der ersten Stromübertragungskomponente 60 ausgebildet. Dabei kann ein Radius der ersten Durchgangsöffnung 150 geringfügig geringer gewählt sein als ein Außenradius der ersten äußeren Umfangsseite 90 (beispielsweise zwischen 1 Prozent bis 4 Prozent).

Rückseitig auf einer dem Betrachter abgewandten Seite kann der erste Einleger 50 einen ersten Verbindungssteg 155 und/oder einen zweiten Verbindungssteg 160 aufweisen, wobei der erste Verbindungssteg 155 und der zweite Verbindungssteg 160 in Querrichtung beabstandet zueinander angeordnet sind. Die ersten und zweiten Verbindungsstege 155, 160 sind in Figur 2 mittels strichlierter Linie angedeutet. Dabei können der erste Verbindungssteg 155 und der zweite Verbindungssteg 160 sich im Wesentlichen parallel zu der x-Achse und der z-Achse erstrecken.

Die erste Außenkontur 135 weist ferner eine erste Seite 165 und eine in y-Richtung gegenüberliegend zur ersten Seite 165 angeordnete zweite Seite 170 auf, wobei die erste Seite 165 und die zweite Seite 170 die erste Oberseite 140 mit der ersten Unterseite 145 verbinden. Dabei sind die erste Seite 165 und die zweite Seite 170 schräg geneigt zueinander und zu der z-Achse angeordnet. Die erste Seite 165 und die zweite Seite 170 laufen von der ersten Oberseite 140 hin zu der ersten Unterseite 145 aufeinander zu. Dabei kann an einem ersten Übergang 175 zwischen der ersten Seite 165 und der ersten Unterseite 145 der erste Übergang 175 verrundet ausgebildet sein. Ein zweiter Übergang 180 zwischen der ersten Unterseite 145 und der zweiten Seite 170 kann ebenso verrundet sein. Ein dritter Übergang 185 zwischen der ersten Seite 165 und der ersten Oberseite 140 kann spitz ausgebildet sein. Aufgrund einer beispielhaft achsensymmetrischen Ausgestaltung des ersten Einlegers 50 bezogen auf eine Symmetrieebene 190, die beispielhaft mittig in Querrichtung des ersten Einlegers 50 angeordnet ist und sich im Wesentlichen in einer xz-Ebene erstreckt, ist ein vierter Übergang 195 zwischen der zweiten Seite 170 und der ersten Oberseite 140 ebenso wie der dritte Übergang 185 spitz zulaufend ausgebildet.

Figur 3 zeigt eine Draufsicht auf den in den Figuren 1 und 2 gezeigten ersten Einleger 50.

Der erste Einleger 50 weist ferner eine zweite Wandung 200 auf, wobei die zweite Wandung 200 in Längsrichtung (x-Richtung) in einem Abstand a zu der ersten Wandung 130 angeordnet ist. Die zweite Wandung 200 ist plattenförmig ausgebildet und verläuft beispielhaft parallel zu ersten Wandung 130. Die zweite Wandung 200 ist auf einer dem Gehäuseinnenraum 30 zugewandten Seite des Einlegers 50 angeordnet. Die zweite Wandung 200 ist mittels des ersten Verbindungsstegs 155 und des zweiten Verbindungsstegs 160 mit der ersten Wandung 130 mechanisch verbunden. Vorzugsweise ist der erste Einleger 50 einstückig und materialeinheitlich ausgebildet. Dabei kann beispielsweise der erste Einleger 50 mittels eines Spritzgussverfahrens hergestellt werden.

Die erste Wandung 130 begrenzt in Längsrichtung zusammen mit der zweiten Wandung 200 eine zwischen der ersten Wandung 130 und der zweiten Wandung 200 angeordnete erste Kammer 205. Die erste Kammer 205 erstreckt sich von der ersten Oberseite 140 bis hin zur ersten Unterseite 145. Seitlich in Querrichtung kann die erste Kammer 205 durch den ersten Verbindungssteg 155 und den zweiten Verbindungssteg 160 begrenzt sein. Die erste Durchgangsöffnung 150 mündet in der ersten Kammer 205.

Zwischen dem ersten Verbindungssteg 155 und der ersten Seite 165 (in Querrichtung) kann der erste Einleger 50 eine zweite Kammer 206 aufweisen. Die zweite Kammer 206 ist nutförmig ausgebildet und hin zur ersten Seite 165 offen. Ebenso ist die zweite Kammer 206 nach oben hin offen und erstreckt sich bis hin zur ersten Unterseite 145. An der ersten Unterseite 145 kann die zweite Kammer 206 ebenfalls offen ausgebildet sein.

Zwischen dem zweiten Verbindungssteg 160 und der zweiten Seite 170 (in Querrichtung) kann der zweite Einleger 95 eine dritte Kammer 207 aufweisen. Die dritte Kammer 207 ist spiegelsymmetrisch bezogen auf die Symmetrieebene 190 zu der zweiten Kammer 206 ausgebildet. Dabei ist die dritte Kammer 207 hin zur ersten Oberseite 140 offen ausgebildet. Die dritte Kammer 207 erstreckt sich von der ersten Oberseite 140 hin bis zur ersten Unterseite 145 und ist bezogen auf die zweite Seite 170 nutförmig ausgebildet. Die dritte Kammer 207 ist somit an der zweiten Seite 170 hin offen. Ebenso ist die dritte Kammer 207 zur ersten Unterseite 145 hin offen ausgebildet.

Figur 4 zeigt eine zweite Seitenansicht auf den in den Figuren 1 bis 3 gezeigten ersten Einleger 50.

Die zweite Wandung 200 weist eine zweite Außenkontur 210 auf, wobei die zweite Außenkontur 210 vorzugsweise identisch zu der ersten Außenkontur 135 ausgebildet ist. Die zweite Wandung 200 weist eine zweite Durchgangsöffnung 215 auf, wobei die zweite Durchgangsöffnung 215 vorzugsweise identisch zu der ersten Durchgangsöffnung 150 ausgebildet ist. Die erste Durchgangsöffnung 150 und die zweite Durchgangsöffnung 215 sind fluchtend bezogen auf die x-Achse ausgebildet. Die zweite Durchgangsöffnung 150 erstreckt sich von einer dem Gehäuseinnenraum 30 zugewandten Seite der zweiten Wandung
200 bis zu der ersten Kammer 150. In nichtmontiertem Zustand verbindet die zweite Durchgangsöffnung 215 die erste Kammer 130 fluidisch mit dem Gehäuseinnenraum 30. Gegenüberliegend zu der ersten Durchgangsöffnung 150 mündet bespielhaft die zweite Durchgangsöffnung 215 in der ersten Kammer 205.

Die erste Kammer 205 weist eine erste maximale Erstreckung b auf, die in den Figuren 1 bis 4 entlang der z-Achse verläuft. Die z-Richtung ist die Haupterstreckungsrichtung der ersten Kammer 205. Die erste maximale Erstreckung b ist deutlich größer, zumindest zweimal bis fünfzehnmal so groß, als der minimale Abstand a der ersten Wandung 130 zu der zweiten Wandung 200. Ferner ist eine zweite maximale Erstreckung l der ersten Durchgangsöffnung 150 senkrecht zu der x-Achse deutlich kleiner als die erste maximale Erstreckung b gewählt Die maximale erste Erstreckung b der ersten Kammer 205 in der Haupterstreckungsrichtung (z-Richtung) ist wenigstens doppelt so groß wie die maximale zweite Erstreckung l der ersten Durchgangsöffnung 150 senkrecht zu der x-Achse.

Von besonderem Vorteil ist, wenn der erste Einleger 50 wenigstens einen der folgenden ersten Werkstoffe aufweist: Kunststoff, Thermoplast, Polyethylen.

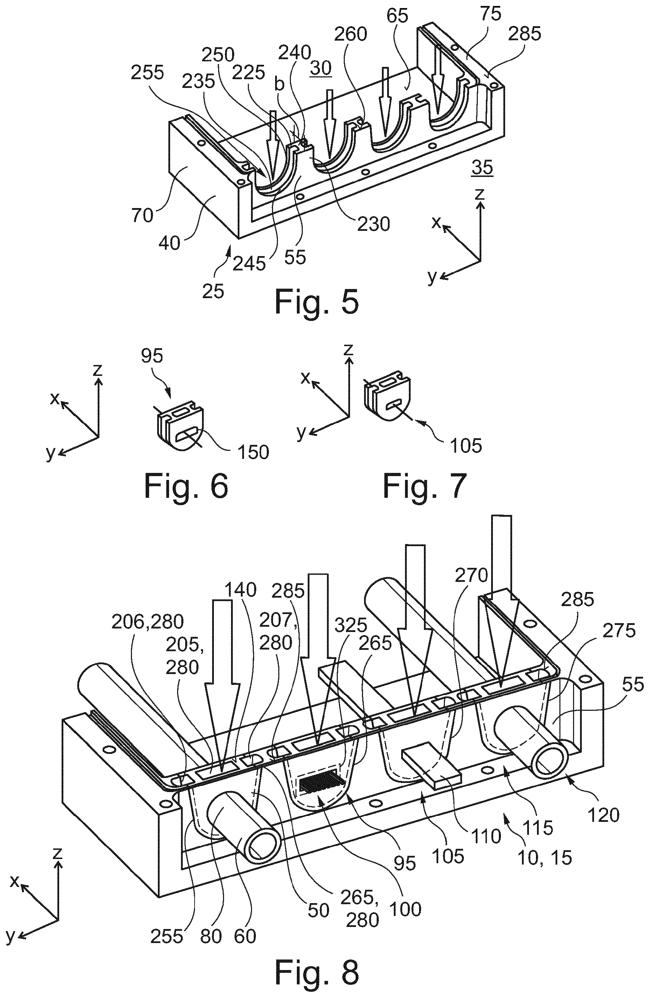

Figur 5 zeigt eine perspektivische Darstellung des Gehäuses 25 mit der ersten Gehäusewand 55.

Die erste Gehäusewand 55 weist eine Innenwand 225 und eine Außenwand 230 auf. Die Innenwand 225 ist auf einer dem Gehäuseinnenraum 30 zugewandten Seite angeordnet. Die Außenwand 230 ist auf einer dem Gehäuseinnenraum 30 abgewandten und der Umgebung 35 zugewandten Seite angeordnet. Die erste Wandung 130 kann eine erste Wandstärke in x-Richtung aufweisen, die im Wesentlichen einer zweiten Wandstärke in x-Richtung der Außenwand 230 entspricht. Die zweite Wandung 200 kann eine dritte Wandstärke in x-Richtung aufweisen, die im Wesentlichen einer vierten Wandstärke in x-Richtung der Innenwand 225 entspricht.

Die Innenwand 225 und die Außenwand 230 sind in x-Richtung beabstandet zueinander mit einem maximalen Außenabstand b angeordnet. Der maximale Außenabstand bezieht sich auf eine Distanz einer Innenseite der Innenwand 225 zu der Außenseite der Außenwand 230. Der Außenabstand b entspricht dem Abstand a oder ist kleiner als der Abstand a. Dabei erstreckt sich sowohl die Innenwand 225 als auch die Außenwand 230 jeweils in einer yz-Ebene. Zwischen der Innenwand und der Außenwand 225, 230 weist die erste Gehäusewand 55 eine Gehäusekammer 235 auf. Die Gehäusekammer 235 kann einteilig durchgehend zwischen der zweiten Gehäusewand 70 und der dritten Gehäusewand 75 ausgebildet sein. Auch kann zwischen der Innenwand 225 und der Außenwand 230 ein dritter Verbindungssteg 240 angeordnet sein, wobei der dritte Verbindungssteg 240 die Innenwand 225 mit der Außenwand 230 mechanisch verbindet. Die Außenwand 230 weist eine dritte Durchgangsöffnung 245 und die Innenwand 225 weist eine vierte Durchgangsöffnung 250 auf.

Die dritte Durchgangsöffnung 245 und die vierte Durchgangsöffnung 250 begrenzen gemeinsam eine erste Aufnahme 255. Die dritte und vierte Durchgangsöffnung 245, 250 weisen beispielhaft in der Formgebung die gleiche Außenkontur wie die des ersten Einlegers 50 auf, jedoch sind die dritte und vierte Durchgangsöffnung 245, 250 kleiner als die Außenkontur 135, 210 des ersten Einlegers 50 ausgebildet.

In der Ausführungsform sind in der ersten Gehäusewand 55 mehrere erste Aufnahmen 255 angeordnet, wobei jeweils zwischen zwei benachbart in y-Richtung angeordneten ersten Aufnahmen 255 jeweils ein dritter Verbindungssteg 240 sich zumindest bereichsweise zwischen der zweiten Oberseite 285 und dem Gehäuseboden 65 erstreckt.

Figur 6 zeigt eine perspektivische Darstellung des zweiten Einlegers 95.

Der zweite Einleger 95 ist im Wesentlichen identisch zu dem in den Figuren 1 bis 4 gezeigten ersten Einleger 50 ausgebildet. Im Folgenden wird ausschließlich auf die Unterschiede des in Figur 6 gezeigten zweiten Einlegers 95 gegenüber dem in den Figuren 1 bis 4 gezeigten ersten Einleger 50 eingegangen.

Abweichend zu dem ersten Einleger 50 sind die erste und zweite Durchgangsöffnung 150, 215 des zweiten Einlegers 95 korrespondierend zu einer zweiten äußeren Umfangsseite der zweiten Stromübertragungskomponente 100 ausgebildet.

Figur 7 zeigt eine perspektivische Darstellung des dritten Einlegers 105.

Der dritte Einleger 105 ist im Wesentlichen identisch zu dem in den Figuren 1 bis 4 erläuterten ersten Einleger 50 ausgebildet. Im Folgenden wird ausschließlich auf die Unterschiede des in Figur 7 gezeigten dritten Einlegers 105 gegenüber dem in den Figuren 1 bis 4 gezeigten ersten Einleger 50 eingegangen.

Die erste Durchgangsöffnung 150 und die zweite Durchgangsöffnung 215 des dritten Einlegers 105 sind korrespondierend zu einer umfangsseitigen Ausgestaltung der dritten Stromübertragungskomponente 110 ausgebildet. Dabei ist die erste und/oder zweite Durchgangsöffnung 150, 215 derart ausgebildet, dass in montiertem Zustand der dritten Stromübertragungskomponente 110 die erste und/oder zweite Durchgangsöffnung 150, 215 umfangsseitig an der dritten Stromübertragungskomponente 110 im Wesentlichen dichtend anliegt. Von besonderem Vorteil ist hierbei, wenn umfangsseitig die erste und zweite Durchgangsöffnung 150, 215 zu der dritten Stromübertragungskomponente 110 als Übergangspassung oder Presspassung ausgebildet ist.

Bezüglich des vierten Einlegers 115 und der vierten Stromübertragungskomponente 120 wird auf den ersten Einleger 50 und die erste Stromübertragungskomponente 60 verwiesen, da die erste Stromübertragungskomponente 60 und die vierte Stromübertragungskomponente 120 in der Ausführungsform identisch zueinander ausgebildet sind. Dadurch ist auch der vierte Einleger 115 identisch zu dem ersten Einleger 50 ausgebildet. Auch wäre eine unterschiedliche Ausgestaltung der vierten Stromübertragungskomponente 120 und der ersten Stromübertragungskomponente 60 möglich.

Figur 8 zeigt die in Figur 1 gezeigte perspektivische Darstellung des elektrischen Geräts 10. Im Folgenden wird das elektrische Gerät 10 in Zusammenhang mit den Figuren 1 bis 8 erläutert.

Der erste Einleger 50 ist in montiertem Zustand des elektrischen Geräts 10 in die erste Aufnahme 255 eingesetzt. Sollten der zweite und/oder dritte und/oder vierte Einleger 95, 105, 115 vorgesehen sein, so ist der zweite Einleger 95 in der in der ersten Gehäusewand 55 ausgebildeten zweiten Aufnahme 265 eingesetzt. Ebenso kann der dritte Einleger 105 in eine in der ersten Gehäusewand 55 ausgebildete dritte Aufnahme 270 und der vierte Einleger 115 in eine ausgebildete vierte Aufnahme 275 eingesetzt sein.

Der Einleger 50, 95, 105, 115 ist jeweils derartig beispielhaft platziert, dass die erste Wandung 130 und die Innenwand 225 in y-Richtung überlappend angeordnet sind. Ebenso ist Einleger 50, 95, 105, 115 derart platziert, dass die zweite Wandung 200 und die Außenwand 230 in y-Richtung überlappend angeordnet sind. Dabei wird unter einer Überlappung in y-Richtung verstanden, dass bei Projektion zweier Komponenten, beispielsweise der ersten Wandung 130 und der Innenwand 225 in eine Projektionseben in y-Richtung, die senkrecht zu der y-Achse verläuft und beispielsweise als xz-Ebene ausgebildet ist, die beiden Komponenten sich in der Projektionsebene überdecken.

In montiertem Zustand des elektrischen Geräts 10 ist durch die erste Durchgangsöffnung 150 und die zweite Durchgangsöffnung 215 die erste Stromübertragungskomponente 60 geführt. Dabei liegt vorzugsweise umfangsseitig die Ummantelung 80 an einer Kontur der ersten Durchgangsöffnung 150 und der zweiten Durchgangsöffnung 215 umfangsseitig dichtend an. Analog zum ersten Einleger 50 ist durch die erste und zweite Durchgangsöffnung 150, 215 des jeweiligen zweiten bis vierten Einlegers 95, 105, 115 die jeweils zugeordnete zweite bis vierte Stromübertragungskomponente 100, 110, 120 geführt.

Die erste bis dritte Kammer 205, 206, 207 schließen sich in montiertem Zustand des jeweils zugeordneten Einlegers 50, 95, 105, 115 in der zugeordneten Aufnahme 255, 265, 270, 275 an die Gehäusekammer 235 an und sind somit fluidisch jeweils mit der Gehäusekammer 235 verbunden. Die Gehäusekammer 235 verbindet die erste Kammer 205 und/oder die zweite Kammer 206 und/oder die dritte Kammer 207 fluidisch miteinander.

Wie in Figur 1 und Figur 8 zu erkennen, ist die erste bis dritte Kammer 205, 206, 207 und die Gehäusekammer 235 an der ersten Oberseite 140 offen. Die erste bis dritte Kammer 205, 206, 207 und die Gehäusekammer 235 bilden einen Gussraum. Im fertig montierten Zustand ist der Gussraum mit einer Vergussmasse 280 verfüllt.

Die Vergussmasse 280 weist wenigstens einen der folgenden zweiten Werkstoffe auf: Kunststoff, Thermoplast, Polyethylen. Von besonderem Vorteil ist, wenn der erste Werkstoff und der zweite Werkstoff identisch sind. Dadurch ist die Vergussmasse 280 besonders gut stoffschlüssig mit dem Einleger 50, 95, 105, 115 und der ersten Gehäusewand 55 verbunden. Von besonderem Vorteil ist, wenn die erste bis dritte Kammer 205, 206, 207 und die Gehäusekammer 235 vollständig mit der Vergussmasse 280 verfüllt ist, sodass im Wesentlichen keine Lunker oder Hohlräume in der Vergussmasse 280 eingeschlossen sind.

In der ersten Kammer 205 ist im ersten Einleger 50 die erste Stromübertragungskomponente 60 vollständig durch die Vergussmasse 280 umschlossen und somit in der Vergussmasse 280 eingebettet. Die Vergussmasse 280 ist stoffschlüssig mit der ersten äußeren Umfangsseite 90 der Ummantelung 80 der ersten Stromübertragungskomponente 60 verbunden. Dadurch dichtet die Vergussmasse 280 innerhalb des ersten Einlegers 50 die erste Stromübertragungskomponente 60 fluiddicht ab. Durch den Übergang der ersten bis dritten Kammer 205, 206, 207 und der Gehäusekammer 235 wird der erste Einleger 50 durch die in die Kammern 205, 206, 207, eingefüllte Vergussmasse 280 an der ersten Gehäusewand 55 fluiddicht abgedichtet und stoffschlüssig mechanisch befestigt.

Durch kleinere Ausgestaltung der ersten Aufnahme 255 zu dem ersten Einleger 50 greift die erste Gehäusewand 55 in die erste bis dritte Kammer 205, 206, 207 abschnittsweise ein. Dabei liegt innenseitig die Innenwand 225 an der zweiten Wandung 200 und die Außenwand 240 außenseitig an der ersten Wandung 130 abschnittsweise an, sodass die erste Gehäusewand 55 und der erste Einleger 50 abschnittsweise überlappen.

Analog zum ersten Einleger 50 und die durch den ersten Einleger 50 in den Gehäuseinnenraum 30 geführte erste Stromübertragungskomponente 60 wird auch der zweite Einleger 95 und die in den zweiten Einleger 95 eingelegte zweite Stromübertragungskomponente 100 geführt. Analog zum ersten Einleger 50 wird die dritte Stromübertragungskomponente 110 am dritten Einleger 105 und die vierte Stromübertragungskomponente 120 am vierten Einleger 115 durch die Vergussmasse 280 fluiddicht abgedichtet.

Die in den Figuren 1 bis 8 gezeigte Ausgestaltung hat den Vorteil, dass auf zusätzliche Kontakteinrichtungen zur Gehäusedurchführung der Stromübertragungskomponente 60, 100, 110, 120 verzichtet werden kann. Ferner kann durch die Verwendung des in den Figuren 1 bis 8 gezeigten Einlegers 50, 95, 105, 115 auf ein kompliziertes Werkzeug zum Vergießen der jeweils zugeordneten und durch den Einleger 50, 95, 105, 115 geführten Stromübertragungskomponente 60, 100, 110, 120 verzichtet werden, sodass eine Fertigungsanlage zum Herstellen des elektrischen Geräts 10 besonders kostengünstig ist.

Besonders einfach und kostengünstig kann das in Figur 1 und 8 gezeigte elektrische Gerät 10 durch das im Folgenden beschriebene Verfahren hergestellt werden. Dabei wird darauf hingewiesen, dass, sofern nicht anders erläutert, das für den ersten Einleger 50 im Folgenden Beschriebene auch für den zweiten bis vierten Einleger 95, 105, 115 und die jeweils durch den zweiten bis vierten Einleger 95, 105, 115 geführte Stromübertragungskomponente 100, 110, 120 gilt.

In einem ersten Verfahrensschritt wird der Einleger 50, 95, 105, 115 in einem ersten Spritzguss hergestellt. Von besonderem Vorteil ist hierbei, wenn auf den Einsatz von Trennmitteln beim Gießen des Einlegers 50, 95, 105, 115 verzichtet wird. Von besonderem Vorteil ist, wenn der Einleger 50, 95, 105, 115 aus dem ersten Werkstoff gegossen wird.

In einem zweiten Verfahrensschritt wird die erste Gehäusewand 55 zusammen mit dem Gehäuse 25 in einem zweiten Spritzguss getrennt vom Einleger 50, 95, 105, 115 aus dem ersten Werkstoff gegossen.

In einem dritten Verfahrensschritt wird durch die erste und zweite Durchgangsöffnung 150, 215 die zugeordnete Stromübertragungskomponente 60, 100, 110, 120 geführt. Beispielsweise wird die erste Stromübertragungskomponente 60 durch die erste und zweite Durchgangsöffnung 150, 215 des ersten Einlegers 50 gesteckt.

Ferner wird im dritten Verfahrensschritt der Einleger 50, 95, 105, 115 mit der Stromübertragungskomponente 60, 100, 110, 120 in die jeweils zugeordnete Aufnahme 255, 265, 270, 275 eingesetzt. Das Einsetzen kann beispielsweise durch eine einfache, geradlinige Bewegung entlang der z-Achse erfolgen.

In einem auf den dritten Verfahrensschritt folgenden vierten Verfahrensschritt wird in zumindest eine der Kammern 205, 206, 207 und/oder in die Gehäusekammer 235 mittels eines nicht dargestellten Spritzwerkzeugs die flüssige Vergussmasse 280 und/oder ein erstes Vorprodukt der Vergussmasse 280 in flüssigem Zustand eingefüllt. Alternativ wäre auch möglich, statt des ersten Vorprodukts ein Gemisch aus dem ersten Vorprodukt und einem zweiten Vorprodukt in flüssigem Zustand mittels des Spritzwerkzeugs in wenigstens eine der Kammern 205, 206, 207 und/oder der Gehäusekammer 235 einzufüllen. Durch die fluidische Verbindung der ersten und/oder zweiten und/oder dritten Kammer 205, 206, 207 mit der Gehäusekammer 235 verteilt sich das erste Vorprodukt und/oder das Gemisch aus dem ersten Vorprodukt und dem zweiten Vorprodukt oder die flüssige Vergussmasse 280 über die Kammer 205, 206, 207 und die Gehäusekammer 235. Die flüssige Vergussmasse 280 und/oder das flüssige erste Vorprodukt und/oder das flüssige Gemisch aus dem ersten und zweiten Vorprodukt umfließt die Stromübertragungskomponente 60, 100, 110, 120 in der ersten Kammer 205 derart, dass die Stromübertragungskomponente 60, 100, 110, 120 in der flüssigen Vergussmasse 280 und/oder dem flüssigen ersten Vorprodukt und/oder dem Gemisch aus dem ersten und zweiten Vorprodukt eingebettet und vollständig umschlossen in der ersten Kammer 205 ist.

Durch den dichtenden Abschluss der ersten und zweiten Durchgangsöffnung 150, 215 an der äußeren Umfangsseite der Stromübertragungskomponente 60, 100, 110, 120 sowie den Eingriff mit einem Gehäuseabschnitt der ersten Gehäusewand 55 in die Kammer 205, 206, 207 wird ein Austritt der flüssigen Vergussmasse 280 und/oder des flüssigen ersten Vorprodukts und/oder des flüssigen Gemischs aus dem ersten und zweiten Vorprodukt aus der ersten Kammer 205 verhindert.

Das Befüllen der Kammer 205, 206, 207 und der Gehäusekammer 235 wird nach Verfüllen einer vordefinierten Menge des ersten Vorprodukts und/oder des Gemischs aus dem ersten Vorprodukt und dem zweiten Vorprodukt und/oder der flüssigen Vergussmasse 280 beendet. Die vordefinierte Menge, die von dem ersten Vorprodukt und/oder dem Gemisch aus dem ersten Vorprodukt und dem zweiten Vorprodukt und der flüssigen Vergussmasse 280 in die Kammer 205, 206, 207 und/oder die Gehäusekammer 235 eingefüllt wird, ist abhängig von dem Ausdehnungsverhalten während des Aushärtens zu der Vergussmasse 280.

In einem auf den vierten Verfahrensschritt folgenden fünften Verfahrensschritt wird das erste Vorprodukt und/oder das Gemisch aus dem ersten Vorprodukt und dem zweiten

Vorprodukt und/oder die flüssige Vergussmasse 280 zu der festen Vergussmasse 280 ausgehärtet. Dabei wird unter Aushärten Verstanden, dass das erste Vorprodukt und/oder das Gemisch aus dem ersten Vorprodukt und dem zweiten Vorprodukt und/oder die flüssige Vergussmasse 280 von einem flüssigen Phasenzustand in einen festen Phasenzustand übergeht. Beim Aushärten kann das erste Vorprodukt mit dem zweiten Vorprodukt vernetzen und die feste Vergussmasse 280 ausbilden. Dabei kann das Gemisch beispielsweise sich aufschäumen und einen geschlossenporigen Schaum ausbilden.

Die eingefüllte Menge des ersten Vorprodukts und/oder des Gemischs aus dem ersten Vorprodukt und dem zweiten Vorprodukt und/oder der flüssigen Vergussmasse 280 ist so gewählt, dass nach Aushärten die ausgehärtete Vergussmasse 280 im Wesentlichen bündig mit der ersten Oberseite 140 abschließt.

Sollte die Vergussmasse 280 beim Aushärten über die erste Oberseite 140 und/oder die zweite Oberseite 285 hervortreten, beispielsweise wenn die Vergussmasse 280 aufschäumt, so kann in einem fakultativen sechsten Verfahrensschritt nach dem Aushärten der Vergussmasse 280 über die erste Oberseite 140 und/oder die zweite Oberseite 285 hervorstehende Vergussmasse 280, beispielsweise mittels eines Schabers, abgetrennt werden.

Die Herstellung solch eines elektrischen Geräts 10 hat den Vorteil, dass in der Montage auf zusätzliche Kontakteinrichtungen um die Stromübertragungskomponente 60, 100, 110, 120 von dem Gehäuseinnenraum 30 in die Umgebung 35 zu führen, verzichtet werden kann. Dadurch ist die Herstellung des elektrischen Geräts 10 mit dem oben beschriebenen Verfahren besonders einfach und kostengünstig.

Ferner entfallen komplexe Werkzeuge, beispielsweise zur Herstellung der jeweiligen Kontakteinrichtungen. Des Weiteren kann beispielsweise an der zweiten Stromübertragungskomponente 100 die zweite Stromübertragungskomponente 100 direkt mittels einer weiteren Kontakteinrichtung 325 (strichliert in Figur 8 dargestellt) kontaktiert werden. Auch ist insgesamt die Anzahl von Werkzeugen zur Herstellung des elektrischen Geräts 10 reduziert.

Der Einleger 50, 95, 105, 115 kann flexibel an die jeweils durchzuführende Stromübertragungskomponente 60, 100, 110, 120 angepasst werden, sodass insgesamt die Geometrie des Gehäuses 25 und der ersten Gehäusewand 55 nicht zu adaptieren ist, auch wenn die Stromübertragungskomponente 60, 100, 110, 120 gegenüber der in den Figuren 1 bis 8 gezeigten Ausgestaltung der Stromübertragungskomponente 60, 100, 110, 120 unterschiedlich ist.

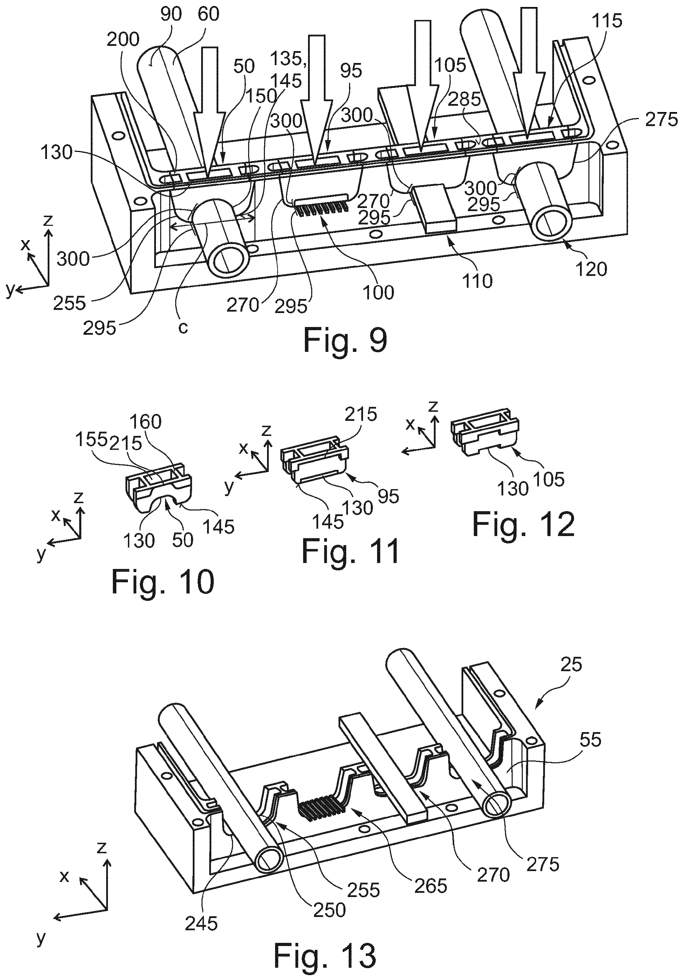

Figur 9 zeigt eine perspektivische Darstellung eines elektrischen Geräts 10 gemäß einer zweiten Ausführungsform.

Das elektrische Gerät 10 ist im Wesentlichen identisch zu dem in den Figuren 1 und 8 gezeigten elektrischen Gerät 10 ausgebildet. Im Folgenden wird ausschließlich auf die Unterschiede des in Figur 9 gezeigten elektrischen Geräts 10 gegenüber dem in den Figuren 1 bis 8 gezeigten elektrischen Gerät 10 eingegangen. Ebenso wird exemplarisch der erste Einleger 50 im Detail erläutert. Das für den ersten Einleger 50 im Folgenden Erläuterte gilt im Wesentlichen auch für den zweiten bis vierten Einleger 95, 105, 115.

Gegenüber der in Figur 1 bis 8 gezeigten Ausgestaltung des elektrischen Geräts 10 sind die erste Außenkontur 135 und die Aufnahme 255, 265, 270, 275 verändert. Zwar weist der Einleger 50, 95, 105, 115 und die jeweils zugeordnet Aufnahme 255, 265, 270, 275 eine im Wesentlichen trapezförmige Grundform auf, jedoch ist die erste Durchgangsöffnung 150 als erste Einbuchtung an der ersten Unterseite 145 der ersten Wandung 130 ausgebildet. Die erste Durchgangsöffnung 150 ist korrespondierend zu einem oberen ersten Teilabschnitt 300 der ersten Stromübertragungskomponente 60 ausgebildet. Die erste Durchgangsöffnung 150 ist beispielsweise im Wesentlichen in mittiger Position zu einer dritten maximalen Erstreckung c in y-Richtung des ersten Einlegers 50 an der ersten Oberseite 140 ausgebildet.

In Figur 9 verdeckt ist ebenso die zweite Durchgangsöffnung 215 in der zweiten Wandung 200 an der ersten Unterseite 145 ausgebildet. Auch die zweite Durchgangsöffnung 215 ist korrespondierend zu dem ersten oberen Teilabschnitt 300 der ersten Stromübertragungskomponente 60 ausgebildet.

Analog zu dem ersten Einleger 50 sind auch der zweite und dritte Einleger 95, 105 ausgebildet, wobei die erste und zweite Durchgangsöffnung 150, 215 jeweils an der ersten Unterseite 145 des zweiten und/oder dritten Einlegers 95, 105 angeordnet ist und zumindest komplementär zu dem ersten Teilabschnitt 300 der jeweils abzudichtenden zweiten bzw. dritten Stromübertragungskomponente 100, 110 ausgebildet ist. Der vierte Einleger 115 ist identisch zu dem ersten Einleger 50 ausgebildet.

Figur 10 zeigt eine perspektivische Darstellung des ersten Einlegers 50.

Von besonderem Vorteil ist, wenn die erste Durchgangsöffnung 150 vollständig zwischen und beabstandet zu dem ersten Verbindungssteg 155 und dem zweiten Verbindungssteg 160 angeordnet ist.

Die erste Durchgangsöffnung 150 und die zweite Durchgangsöffnung 215 weisen eine teilkreisförmige Ausgestaltung korrespondierend zu der ersten äußeren Umfangsseite 90 der ersten Stromübertragungskomponente 60 auf. Die erste Unterseite 145 ist beispielsweise seitlich angrenzend in Querrichtung an die Durchgangsöffnung 150, 215 im Wesentlichen in einer xy-Ebene verlaufend ausgebildet.

Figur 11 zeigt eine perspektivische Darstellung des zweiten Einlegers 95.

Der zweite Einleger 95 ist im Wesentlichen identisch zu dem in Figur 10 gezeigten ersten Einleger 50 ausgebildet, wobei im Folgenden nur ausschließlich auf die Unterschiede des zweiten Einlegers 95 gegenüber dem ersten Einleger 50 eingegangen wird.

Die erste und/oder zweite Durchgangsöffnung 150, 215 weist eine im Wesentlichen rechteckförmige Ausgestaltung auf und bildet im Wesentlichen den ersten oberen Teilabschnitt 300 eines Außenumrisses der zweiten Stromübertragungskomponente 100 ab. Die erste und/der zweite Durchgangsöffnung 150, 215 erstreckt sich in Querrichtung im Wesentlichen über die gesamte erste Unterseite 145 des zweiten Einlegers 95.

Die Kontur der ersten und/oder zweiten Durchgangsöffnung 150, 215 kann beispielsweise gegenüber dem Außenumriss der zweiten Stromübertragungskomponente 100 derart vereinfacht sein, sodass die erste und zweite Durchgangsöffnung 150, 215 nicht fluiddicht an der zweiten Stromübertragungskomponente 100 anliegen kann.

Figur 12 zeigt eine perspektivische Darstellung des in Figur 10 gezeigten dritten Einlegers 105.

Der dritte Einleger 105 ist im Wesentlichen identisch zu dem in Figur 11 gezeigten zweiten Einleger 95 ausgebildet. Im Folgenden wird ausschließlich auf die Unterschiede des in Figur 12 gezeigten dritten Einlegers 105 gegenüber dem in Figur 11 gezeigten zweiten Einleger 95 eingegangen.

Die Durchgangsöffnung 150, 215 ist in Querrichtung kürzer als in Figur 11 ausgebildet und erstreckt sich beispielhaft über etwa die halbe Breite in Querrichtung der ersten Unterseite 145. Dabei ist die erste und/oder zweite Durchgangsöffnung 150, 215 korrespondierend zu dem oberen ersten Teilabschnitt 300 der dritten Stromübertragungskomponente 110 ausgeformt. Dabei weist beispielhaft die erste und/oder zweite Durchgangsöffnung 150, 215 eine rechteckförmige Ausgestaltung auf.

Figur 13 zeigt eine perspektivische Darstellung des Gehäuses 25 und der ersten Gehäusewand 55.

Die erste Gehäusewand 55 ist im Wesentlichen identisch zu der in Figur 5 gezeigten ersten Gehäusewand 55 ausgebildet. Im Folgenden wird ausschließlich auf die Unterschiede der in Figur 13 gezeigten ersten Gehäusewand 55 gegenüber der in Figur 5 gezeigten ersten Gehäusewand 55 eingegangen.

Die dritte Durchgangsöffnung 245 ist bereichsweise korrespondierend zu einem unteren zweiten Teilabschnitt 295 der ersten Stromübertragungskomponente 60 ausgebildet und weist beispielhaft eine teilkreisförmige Ausgestaltung auf. Die vierte Durchgangsöffnung 250 ist beispielsweise korrespondierend zu dem zweiten unteren Teilabschnitt 295 der ersten Stromübertragungskomponente 60 ausgebildet. Dabei ist die geometrische Ausgestaltung im Wesentlichen identisch zu der dritten Durchgangsöffnung 245 gewählt, wobei die dritte und vierte Durchgangsöffnung 245, 250 in x-Richtung überlappend ausgebildet sind. Dabei wird unter einer Überlappung in x-Richtung verstanden, dass bei Projektion zweier Komponenten, beispielsweise der dritten und vierten Durchgangsöffnung 245, 250, in eine Projektionseben in x-Richtung, die senkrecht zu der x-Achse verläuft und beispielsweise als yz-Ebene ausgebildet ist, die beiden Komponenten sich bei der Projektion in x-Richtung in der Projektionsebene überdecken.

Analog zu der ersten Aufnahme 255 ist auch die zweite und dritte Aufnahme 265, 270 ausgebildet. Die vierte Aufnahme 275 ist aufgrund der identischen Ausgestaltung der ersten Stromübertragungskomponente 60 und der vierten Stromübertragungskomponente 120 identisch zu der ersten Aufnahme 255 ausgebildet. Die dritte und vierte Durchgangsöffnung 245, 250 der zweiten und dritten Aufnahme 265, 270 ist bereichsweise rechteckförmig, vorzugsweise spiegelsymmetrisch, zu der ersten Durchgangsöffnung 150 bzw. der zweiten Durchgangsöffnung 215 des zweiten Einlegers 95 bzw. des dritten Einlegers 105 ausgebildet.

Die Herstellung des in Figur 9 gezeigten elektrischen Geräts 10 erfolgt im Wesentlichen identisch zu dem in den Figuren 1 bis 8 beschriebenen elektrischen Gerät 10. Abweichend dazu wird, anstatt im dritten Verfahrensschritt die Stromübertragungskomponente 60, 100, 110, 120 durch die erste und zweite Durchgangsöffnung 150, 215 zu stecken, die Stromübertragungskomponente 60, 100, 110, 120 in die jeweils zugeordnete dritte und vierte Durchgangsöffnung 245, 250 mit dem zweiten unteren Teilabschnitt 295 eingelegt.

Im vierten Verfahrensschritt wird der Einleger 50, 95, 105, 115 in die jeweils zugeordnete Aufnahme 255, 265, 270, 275 eingesteckt, wobei sich der Einleger 50, 95, 105, 115 oberseitig mit der ersten und zweiten Durchgangsöffnung 150, 215 an den ersten Teilabschnitt 300 der jeweils zugeordneten Stromübertragungskomponente 60, 100, 110, 120 anschmiegt.

Das Verfüllen im fünften Verfahrensschritt mittels der Vergussmasse 280 erfolgt ebenso wie in den Figuren 1 bis 8 beschrieben, jedoch ist die Gehäusekammer 235 so ausgestaltet, dass die Gehäusekammer 235 umfangsseitig vollständig um die Aufnahme 255, 265, 270, 275 verlaufend ausgebildet ist. Dadurch ist sichergestellt, dass die Stromübertragungskomponente 60, 100, 110, 120 durch die Vergussmasse 280 vollständig umschlossen und eingebettet ist, sodass an der Stromübertragungskomponente 60, 100, 110, 120 eine Fluiddichtheit sichergestellt ist.

Die in den Figuren 9 bis 13 gezeigte Ausgestaltung hat den Vorteil, dass auf das Durchstecken der Stromübertragungskomponente 60, 100, 110, 120 durch den jeweils zugeordneten Einleger 50, 95, 105, 115 gegenüber der in den Figuren 1 bis 8 gezeigten Ausgestaltung verzichtet werden kann, sodass das Herstellungsverfahren zur Herstellung des elektrischen Geräts 10 besonders einfach und kostengünstig ist. Ferner ist die in den Figuren 9 bis 13 gezeigte Ausgestaltung besonders geeignet, um automatisiert hergestellt zu werden.

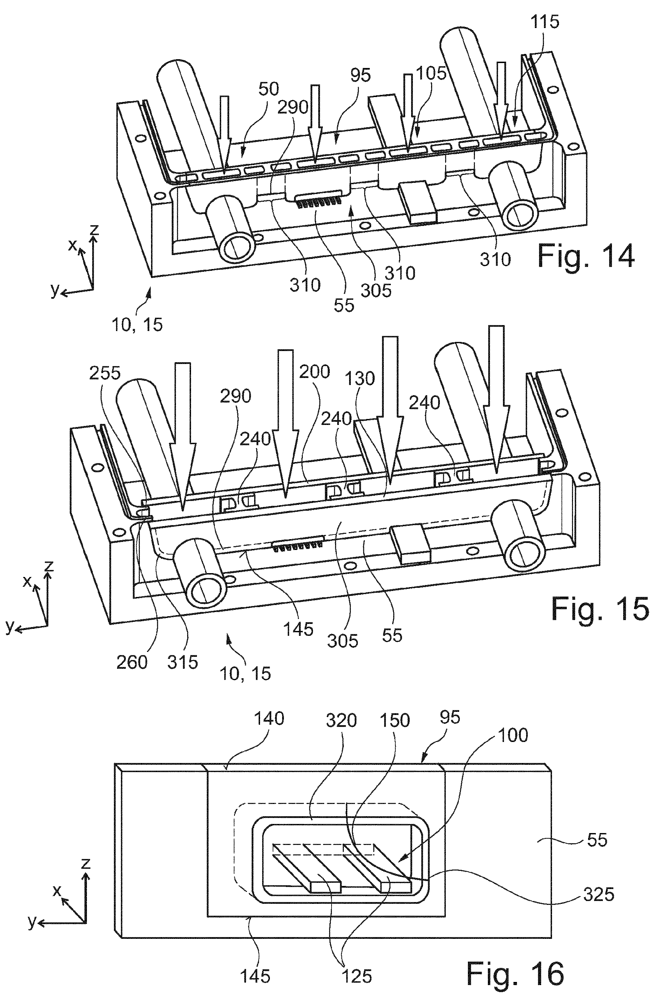

Figur 14 zeigt eine perspektivische Darstellung eines elektrischen Geräts 10 gemäß einer dritten Ausführungsform.

Das elektrische Gerät 10 ist im Wesentlichen identisch zu der in den Figuren 9 bis 13 gezeigten Ausgestaltung des elektrischen Geräts 10 ausgebildet. Im Folgenden wird ausschließlich auf die Unterschiede des in Figur 14 gezeigten elektrischen Geräts 10 gegenüber dem in den Figuren 9 bis 13 gezeigten elektrischen Geräts 10 eingegangen.

In der Ausführungsform weist das elektrische Gerät 10 ausschließlich einen Sammeleinleger 305 auf, wobei der Sammeleinleger 305 die in den Figuren 9 bis 13 gezeigten ersten bis vierten Einleger 50, 95, 105, 115 zusammenfasst. Der Sammeleinleger 305 weist somit den ersten bis vierten Einleger 50, 95, 105, 115 auf, wobei die Einleger 50, 95, 105, 115 über einen Koppelabschnitt 310 jeweils miteinander verbunden sind. Der Koppelabschnitt 310 ist jeweils zwischen zwei in Querrichtung nebeneinander angeordneten Einlegern 50, 95, 105, 115 angeordnet und verbindet die jeweils nächstliegend benachbart in y-Richtung zueinander angeordneten Einleger 50, 95, 105, 115 miteinander.

Korrespondierend zu der Ausgestaltung des Sammeleinlegers 305 ist ebenso die erste Gehäusewand 55 ausgebildet. Die Aufnahmen 255, 265, 270, 275 sind korrespondierend zu dem Sammeleinleger 305 ausgebildet. Dabei ist die erste Gehäusewand 55 zwischen der ersten Aufnahme 255 und der zweiten Aufnahme 265 sowie zwischen der zweiten Aufnahme 265 und der dritten Aufnahme 270 und zwischen der dritten Aufnahme 270 und der vierten Aufnahme 275 zur Ausbildung einer Sammelaufnahme 290 abgeflacht. Der abgeflachte Bereich zwischen den Aufnahmen 255, 265, 270, 275 dient jeweils zur Aufnahme des Koppelabschnitts 310.

Bei der Herstellung des elektrischen Geräts 10 wird im vierten Verfahrensschritt anstatt vier Einleger 50, 95, 105, 115 in nur einem einzigen Montageschritt der Sammeleinleger 305 in die Gehäusewand 55 eingefügt und dadurch ist die Anzahl von Montageschritten reduziert.

Figur 15 zeigt eine perspektivische Darstellung eines elektrischen Geräts 10 gemäß einer vierten Ausführungsform.

Das elektrische Gerät 10 ist im Wesentlichen eine Weiterbildung des in Figur 14 gezeigten elektrischen Geräts 10.

Der Sammeleinleger 305 ist in Querrichtung und an der ersten Unterseite 145 in Längsrichtung breiter als in Figur 14 gezeigt ausgebildet, sodass in einem Randabschnitt 315 (strichliert in Figur 15 markiert) der Sammeleinleger 305 und die erste Gehäusewand 55 vorzugsweise sowohl an der Innenwand 225 als auch an der Außenwand 230 in x-Richtung überlappen.

Die erste Gehäusewand 55 greift zwischen die erste Wandung 130 und die zweite Wandung 200 zumindest mit dem dritten Verbindungssteg 240 ein. Diese Ausgestaltung hat den Vorteil, dass in x-Richtung eine genaue Positionierung des in y-Richtung besonders breit ausgebildeten Sammeleinlegers 305 sichergestellt ist. Dadurch ist eine Montagekraft, um den Sammeleinleger 305 in z-Richtung zu montieren, gegenüber Figur 14 reduziert.

Figur 16 zeigt eine perspektivische Darstellung eines elektrischen Geräts 10 gemäß einer fünften Ausführungsform.

In der Ausführungsform ist nur der zweite Einleger 95 an der ersten Gehäusewand 55 angeordnet. Auf die weiteren Einleger 50, 105, 115 und Stromübertragungskomponenten 60, 110, 120 wird verzichtet.

Beispielhaft weist der zweite Einleger 95 zusätzlich eine Steckkulisse 320 auf, die stirnseitig auf einer dem Gehäuseinnenraum 30 abgewandten Seite angeordnet ist. Die Steckkulisse 320 kann beispielsweise als umlaufender, die erste Durchgangsöffnung 150 umgreifender Rand ausgebildet sein, der beabstandet zu der zweiten Stromübertragungskomponente 100, beispielsweise in Figur 16 zweier in Querrichtung beabstandet angeordneter Pins 125 der zweiten Stromübertragungskomponente 100, ausgebildet ist. Die Steckkulisse 320 ist beabstandet in Höhenrichtung sowohl zu der ersten Unterseite 145 als auch zu der ersten Oberseite 140 ausgebildet. Die Steckkulisse 320 wird während des ersten Verfahrensschritts zur Herstellung des zweiten Einlegers 95 im Rahmen des Spritzgussvorgangs des zweiten Einlegers 95 ausgeformt.

Die in Figur 16 gezeigte Ausgestaltung hat den Vorteil, dass mittels der Steckkulisse 320 auf einfache Weise die weitere Kontakteinrichtung 325 (in Figur 16 strichliert dargestellt) auf die zweite Stromübertragungskomponente 100 aufgesteckt werden kann. Insbesondere stellt die Steckkulisse 320 eine korrekte Ausrichtung der weiteren Kontakteinrichtung 325 zu der zweiten Stromübertragungskomponente 100 sicher. Ferner kann mittels der Steckkulisse 320 ein Kontaktgehäuse der weiteren Kontakteinrichtung 325 beispielsweise reibschlüssig befestigt werden.

### Bezugszeichenliste

- 10: elektrisches Gerät
- 15: Steuergerät
- 20: Kabeldurchführung
- 25: Gehäuse
- 30: Gehäuseinnenraum
- 35: Umgebung
- 40: Gehäuseteil
- 45: Gehäusedeckel
- 50: erster Einleger
- 55: erste Gehäusewand
- 60: erste Stromübertragungskomponente
- 65: Gehäuseboden
- 70: zweite Gehäusewand
- 75: dritte Gehäusewand
- 80: Ummantelung
- 85: elektrischer Leiter
- 90: erste äußere Umfangsseite (der Ummantelung)
- 95: zweiter Einleger
- 100: zweite Stromübertragungskomponente
- 105: dritter Einleger
- 110: dritte Stromübertragungskomponente
- 115: vierter Einleger
- 120: vierte Stromübertragungskomponente
- 125: Pin
- 130: erste Wandung
- 135: erste Außenkontur
- 140: erste Oberseite
- 145: erste Unterseite
- 150: erste Durchgangsöffnung
- 155: erster Verbindungssteg
- 160: zweiter Verbindungssteg
- 165: erste Seite
- 170: zweite Seite
- 175: erster Übergang
- 180: zweiter Übergang
- 185: dritter Übergang
- 190: Symmetrieebene
- 195: vierter Übergang
- 200: zweite Wandung
- 205: erste Kammer
- 206: zweite Kammer
- 207: dritte Kammer
- 210: zweite Außenkontur
- 215: zweite Durchgangsöffnung
- 220: zweite Unterseite
- 225: Innenwand
- 230: Außenwand
- 235: Gehäusekammer
- 240: dritter Verbindungssteg
- 245: dritte Durchgangsöffnung
- 250: vierte Durchgangsöffnung
- 255: erste Aufnahme
- 265: zweite Aufnahme
- 270: dritte Aufnahme
- 275: vierte Aufnahme
- 280: Vergussmasse
- 285: zweite Oberseite
- 290: Sammelaufnahme
- 295: zweiter Teilabschnitt
- 300: erster Teilabschnitt
- 305: Sammeleinleger
- 310: Koppelabschnitt
- 315: Randabschnitt
- 320: Steckkulisse
- 325: weitere Kontakteinrichtung

- a: minimaler Abstand
- b: erste maximale Erstreckung
- l: zweite maximale Erstreckung
- c: dritte maximale Erstreckung

## Patentansprüche

1. Elektrisches Gerät (10), insbesondere Steuergerät,
- aufweisend einen Einleger (50, 95, 105, 115), eine Stromübertragungskomponente (60, 100, 110, 120) und ein Gehäuse (25) mit einer Gehäusewand (55) mit einer Innenwand (225) und einer beabstandet bezogen auf die Achse (x) zu der Innenwand (225) angeordneten Außenwand (230),
- wobei der Einleger (50, 95, 105, 115) eine erste Wandung (130), eine entlang einer Achse (x) beabstandet zu der ersten Wandung (130) versetzt angeordnete zweite Wandung (200) und eine erste Kammer (205) aufweist,
- wobei die erste Wandung (130) eine erste Durchgangsöffnung (150) und die zweite Wandung (200) eine zweite Durchgangsöffnung (215) aufweist,
- wobei die erste Durchgangsöffnung (150) und die zweite Durchgangsöffnung (215) fluchtend bezogen auf die Achse (x) ausgebildet sind,
- wobei die erste Wandung (130) an der ersten Durchgangsöffnung (150) und die zweite Wandung (200) an der zweiten Durchgangsöffnung (215) ausgebildet sind, an einer Stromübertragungskomponente (60, 100, 110, 120) des elektrischen Geräts (10) anzuliegen,
- wobei die erste Kammer (205) zwischen der ersten Wandung (130) und der zweiten Wandung (200) angeordnet ist,
- wobei die erste Durchgangsöffnung (150) und die zweite Durchgangsöffnung (215) in der ersten Kammer (205) münden,
- wobei die Außenwand (230) eine dritte Durchgangsöffnung (245) und die Innenwand (225) eine vierte Durchgangsöffnung (250) aufweisen, in die der Einleger (50, 95, 105, 115) eingreift,
- wobei die Innenwand (225) und die Außenwand (230) eine Gehäusekammer (235) begrenzen,
- wobei die Stromübertragungskomponente (60, 100, 110, 120) wenigstens die erste und zweite Durchgangsöffnung (150, 215) durchgreift und zwischen der ersten Wandung (130) und der zweiten Wandung (200) in der Vergussmasse (280) eingebettet ist,
**dadurch gekennzeichnet, dass**
- die Gehäusekammer (235) und die erste Kammer (205) ineinander münden,
- wobei die erste Kammer (205) und die Gehäusekammer (235) mit einer Vergussmasse (280) verfüllt sind.

2. Elektrisches Gerät (10) nach Anspruch 1,
- wobei der Einleger (95) auf einer der ersten Kammer (205) abgewandten Seite eine Steckkulisse (320) einer Kontakteinrichtung (325) aufweist,
- wobei die Steckkulisse (320) umfangsseitig um die Stromübertragungskomponente (60, 100, 110, 120) ausgebildet ist.

3. Elektrisches Gerät (10) nach einem der vorhergehenden Ansprüche,
- aufweisend einen weiteren Einleger (95, 105, 115), wobei der Einleger (50) mit dem weiteren Einleger (95, 105, 115) zu einem Sammeleinleger (305) verbunden ist, wobei die Gehäusewand (55) zwischen dem Einleger (50) und dem weiteren Einleger (95, 105, 115) eingreift, wobei der Sammeleinleger (305) formschlüssig an der Gehäusewand (55) befestigt ist.

4. Elektrisches Gerät (10) nach einem der vorhergehenden Ansprüche ,
- wobei die Gehäusewand (55) und/oder der Einleger (50, 95, 105, 115) wenigstens einen der folgenden ersten Werkstoffe aufweist:
- Kunststoff,
- Thermoplast,
- Polyethylen,
- Silikon,
- Polyurethan,
- Schaum,
- geschlossenporigen Schaum,
- wobei die Vergussmasse (280) wenigstens einen der folgenden zweiten Werkstoffe aufweist:
- Kunststoff,
- Thermoplast,
- Polyethylen,
- Silikon,
- Polyurethan,
- und/oder
- wobei der erste Werkstoff und der zweite Werkstoff identisch sind.

5. Elektrisches Gerät (10) nach einem der vorhergehenden Ansprüche,
- wobei die Vergussmasse (280) stoffschlüssig den Einleger (50, 95, 105, 115) mit der Gehäusewand (55) und der Stromübertragungskomponente (60, 100, 110, 120) verbindet.

6. Elektrisches Gerät (10) nach einem der vorhergehenden Ansprüche,
- wobei der Einleger (50, 95, 105, 115) eine zwischen der ersten Wandung (130) und der zweiten Wandung (200) angeordnete zweite Kammer (206) aufweist, wobei die zweite Kammer (206) nutförmig an dem Einleger (50, 95, 105, 115) ausgebildet ist.

7. Elektrisches Gerät (10) nach einem der vorhergehenden Ansprüche,
- aufweisend wenigstens einen Verbindungssteg (155, 160),
- wobei sich der Verbindungssteg (155, 160) zwischen der ersten Wandung (130) und der zweiten Wandung (200) erstreckt und die erste Wandung (130) mit der zweiten Wandung (200) mechanisch verbindet.

8. Verfahren zur Herstellung eines elektrischen Geräts (10) nach einem der vorhergehenden Ansprüche,
- wobei der Einleger (50, 95, 105, 115), wenigstens eine Stromübertragungskomponente (60, 100, 110, 120) und das Gehäuse (25) bereitgestellt werden,
- wobei die Stromübertragungskomponente (60, 100, 110, 120) durch die erste und zweite Durchgangsöffnung (150, 215) geführt wird,
- wobei der Einleger (50, 95, 105, 115) in die Gehäusewand (55) derart eingesteckt wird, dass die erste Kammer (205) des Einlegers (50, 95, 105, 115) und die Gehäusekammer (235) der Gehäusewand (55) fluidisch miteinander verbunden werden,
- wobei ein Vorprodukt einer Vergussmasse (280) oder eine flüssige Vergussmasse (280) in die erste Kammer (205) des Einlegers (50, 95, 105, 115) und die Gehäusekammer (235) der Gehäusewand (55) eingebracht wird,
- wobei das Vorprodukt zu der Vergussmasse (280) ausgehärtet wird oder die flüssige Vergussmasse (280) ausgehärtet wird.

9. Verfahren nach Anspruch 8,
- wobei das Vorprodukt der Vergussmasse (280) in der ersten Kammer (205) die Stromübertragungskomponente (60, 100, 110, 120) umfließt.

10. Verfahren nach Anspruch 8 oder 9,
- wobei das Vorprodukt der Vergussmasse (280) beim Aushärten aufschäumt.

11. Verfahren nach einem der Ansprüche 8 bis 10,
- wobei die Gehäusewand (55) und die erste Wandung (130) und/oder zweite Wandung (200) überlappend angeordnet werden.

## Claims

1. Electrical device (10), in particular a control device,
- having an insert (50, 95, 105, 115), a current-transfer component (60, 100, 110, 120) and a housing (25) with a housing wall (55) with an inner wall (225) and with an outer wall (230), which is arranged spaced apart from the inner wall (225) in relation to the axis (x),
- wherein the insert (50, 95, 105, 115) has a first wall (130), a second wall (200), which is arranged offset in a manner spaced apart from the first wall (130) along an axis (x), and a first chamber (205),
- wherein the first wall (130) has a first passage opening (150) and the second wall (200) has a second passage opening (215),
- wherein the first passage opening (150) and the second passage opening (215) are configured to be aligned in relation to the axis (x),
- wherein the first wall (130) is configured to abut against a current-transfer component (60, 100, 110, 120) of the electrical device (10) at the first passage opening (150), and the second wall (200) is configured to abut against said current-transfer component at the second passage opening (215),
- wherein the first chamber (205) is arranged between the first wall (130) and the second wall (200),
- wherein the first passage opening (150) and the second passage opening (215) open out into the first chamber (205),
- wherein the outer wall (230) has a third passage opening (245), and the inner wall (225) has a fourth passage opening (250), into which the insert (50, 95, 105, 115) engages,
- wherein the inner wall (225) and outer wall (230) delimit a housing chamber (235),
- wherein the current-transfer component (60, 100, 110, 120) passes through at least the first and second passage openings (150, 215) and is embedded in the potting compound (280) between the first wall (130) and the second wall (200),
**characterized in that**,
- the housing chamber (235) and the first chamber (205) open out into one another,
- wherein the first chamber (205) and the housing chamber (235) are filled with a potting compound (280).

2. Electrical device (10) according to Claim 1,
- wherein the insert (95) has on a side facing away from the first chamber (205) a plug-in slotted guide (320) for a contact means (325),
- wherein the plug-in slotted guide (320) is configured to extend peripherally around the current-transfer component (60, 100, 110, 120).

3. Electrical device (10) according to either of the preceding claims,
- having a further insert (95, 105, 115), wherein the insert (50) is connected to the further insert (95, 105, 115) to form a collective insert (305), wherein the housing wall (55) engages between the insert (50) and the further insert (95, 105, 115), wherein the collective insert (305) is fastened in a form-fitting manner to the housing wall (55).

4. Electrical device (10) according to one of the preceding claims,
- wherein the housing wall (55) and/or the insert (50, 95, 105, 115) comprises at least one of the following first materials:
- plastic,
- thermoplastic,
- polyethylene,
- silicone,
- polyurethane,
- foam,
- closed-pore foam,
- wherein the potting compound (280) comprises at least one of the following second materials:
- plastic,
- thermoplastic,
- polyethylene,
- silicone,
- polyurethane,
- and/or
- wherein the first material and the second material are identical.

5. Electrical device (10) according to one of the preceding claims,
- wherein the potting compound (280) connects the insert (50, 95, 105, 115) to the housing wall (55) and to the current-transfer component (60, 100, 110, 120) in a materially bonded manner.

6. Electrical device (10) according to one of the preceding claims,
- wherein the insert (50, 95, 105, 115) has a second chamber (206) which is arranged between the first wall (130) and the second wall (200), wherein the second chamber (206) is formed in a groove-shaped manner at the insert (50, 95, 105, 115).

7. Electrical device (10) according to one of the preceding claims,
- having at least one connecting web (155, 160),
- wherein the connecting web (155, 160) extends between the first wall (130) and the second wall (200) and mechanically connects the first wall (130) to the second wall (200).

8. Method for producing an electrical device (10) according to one of the preceding claims,
- wherein the insert (50, 95, 105, 115), at least one current-transfer component (60, 100, 110, 120) and the housing (25) are provided,
- wherein the current-transfer component (60, 100, 110, 120) is led through the first and second passage openings (150, 215),
- wherein the insert (50, 95, 105, 115) is plugged into the housing wall (55) in such a way that the first chamber (205) of the insert (50, 95, 105, 115) and the housing chamber (235) of the housing wall (55) are connected fluidically to one another,
- wherein a precursor of a potting compound (280) or a liquid potting compound (280) is introduced into the first chamber (205) of the insert (50, 95, 105, 115) and the housing chamber (235) of the housing wall (55),
- wherein the precursor is cured to form the potting compound (280) or the liquid potting compound (280) is cured.

9. Method according to Claim 8,
- wherein the precursor of the potting compound (280) flows around the current-transfer component (60, 100, 110, 120) in the first chamber (205).

10. Method according to Claim 8 or 9,
- wherein the precursor of the potting compound (280) foams when it is cured.

11. Method according to one of Claims 8 to 10,
- wherein the housing wall (55) and the first wall (130) and/or second wall (200) are arranged in an overlapping manner.

## Revendications

1. Appareil électrique (10), notamment contrôleur,
- possédant un insert (50, 95, 105, 115), un composant de transmission de courant (60, 100, 110, 120) et un boîtier (25) avec une paroi de boîtier (55) comportant une paroi intérieure (225) et une paroi extérieure (230) qui est disposée à distance de la paroi intérieure (225) par rapport à l'axe (x),
- l'insert (50, 95, 105, 115) possédant une première paroi (130), une deuxième paroi (200) disposée le long d'un axe (x) décalée par rapport à la première paroi (130) et une première chambre (205),
- la première paroi (130) possédant une première ouverture de passage (150) et la deuxième paroi (200) une deuxième ouverture de passage (215),
- la première ouverture de passage (150) et la deuxième ouverture de passage (215) étant configurées alignées par rapport à l'axe (x),
- la première paroi (130) étant formée au niveau de la première ouverture de passage (150) et la deuxième paroi (200) au niveau de la deuxième ouverture de passage (215), afin de venir en appui contre un composant de transmission de courant (60, 100, 110, 120) de l'appareil électrique (10),
- la première chambre (205) étant disposée entre la première paroi (130) et la deuxième paroi (200),
- la première ouverture de passage (150) et la deuxième ouverture de passage (215) débouchant dans la première chambre (205),
- la paroi extérieure (230) possédant une troisième ouverture de passage (245) et la paroi intérieure (225) une quatrième ouverture de passage (250) dans laquelle vient en prise l'insert (50, 95, 105, 115),
- la paroi intérieure (225) et la paroi extérieure (230) délimitant une chambre de boîtier (235),
- le composant de transmission de courant (60, 100, 110, 120) traversant au moins les première et deuxième ouvertures de passage (150, 215) et étant enrobé dans la masse de scellement (280) entre la première paroi (130) et la deuxième paroi (200),
**caractérisé en ce que**
- la chambre de boîtier (235) et la première chambre (205) débouchent l'une dans l'autre,
- la première chambre (205) et la chambre de boîtier (235) étant remplies d'une masse de scellement (280).

2. Appareil électrique (10) selon la revendication 1,
- l'insert (95) possédant, sur un côté opposé à la première chambre (205), une coulisse d'enfichage (320) d'un dispositif de contact (325),
- la coulisse d'enfichage (320) étant formée sur le pourtour autour du composant de transmission de courant (60, 100, 110, 120).

3. Appareil électrique (10) selon l'une des revendications précédentes,
- possédant un insert supplémentaire (95, 105, 115), l'insert (50) étant relié à l'insert supplémentaire (95, 105, 115) pour former un insert collecteur (305), la paroi de boîtier (55) venant en prise entre l'insert (50) et l'insert supplémentaire (95, 105, 115), l'insert collecteur (305) étant fixé à la paroi de boîtier (55) par complément de forme.

4. Appareil électrique (10) selon l'une des revendications précédentes,
- la paroi de boîtier (55) et/ou l'insert (50, 95, 105, 115) présentant au moins l'un des premiers matériaux suivants :
- matière plastique,
- thermoplastique,
- polyéthylène,
- silicone,
- polyuréthane,
- mousse,
- mousse à pores fermés,
- la masse de scellement (280) présentant au moins l'un des deuxièmes matériaux suivants :
- matière plastique,
- thermoplastique,
- polyéthylène,
- silicone,
- polyuréthane,
et/ou
- le premier matériau et le deuxième matériau étant identiques.

5. Appareil électrique (10) selon l'une des revendications précédentes,
- la masse de scellement (280) reliant par liaison de matière l'insert (50, 95, 105, 115) à la paroi du boîtier (55) et au composant de transmission de courant (60, 100, 110, 120).

6. Appareil électrique (10) selon l'une des revendications précédentes,
- l'insert (50, 95, 105, 115) possédant une deuxième chambre (206) disposée entre la première paroi (130) et la deuxième paroi (200), la deuxième chambre (206) étant réalisée en forme de rainure sur l'insert (50, 95, 105, 115).

7. Appareil électrique (10) selon l'une des revendications précédentes,
- possédant au moins une nervure de liaison (155, 160),
- la nervure de liaison (155, 160) s'étendant entre la première paroi (130) et la deuxième paroi (200) et reliant mécaniquement la première paroi (130) à la deuxième paroi (200).

8. Procédé de fabrication d'un appareil électrique (10) selon l'une des revendications précédentes,
- l'insert (50, 95, 105, 115), au moins un composant de transmission de courant (60, 100, 110, 120) et le boîtier (25) étant fournis,
- le composant de transmission de courant (60, 100, 110, 120) étant amené à passer à travers les première et deuxième ouvertures de passage (150, 215),
- l'insert (50, 95, 105, 115) étant enfiché dans la paroi de boîtier (55) de telle sorte que la première chambre (205) de l'insert (50, 95, 105, 115) et la chambre de boîtier (235) de la paroi de boîtier (55) soient reliées entre elles de manière fluidique,
- un précurseur d'une masse de scellement (280) ou une masse de scellement liquide (280) étant introduit dans la première chambre (205) de l'insert (50, 95, 105, 115) et dans la chambre de boîtier (235) de la paroi de boîtier (55),
- le précurseur étant durci pour former la masse de scellement (280) ou la masse de scellement liquide (280) étant durcie.

9. Procédé selon la revendication 8,
- le précurseur de la masse de scellement (280) dans la première chambre (205) entourant le composant de transmission de courant (60, 100, 110, 120) par écoulement.

10. Procédé selon la revendication 8 ou 9,
- le précurseur de la masse de scellement (280) moussant lors du durcissement.

11. Procédé selon l'une des revendications 8 à 10,
- la paroi de boîtier (55) et la première paroi (130) et/ou la deuxième paroi (200) étant disposées de manière à se chevaucher.
